**Europäisches Patentamt**

**European Patent Office**

**Office européen des brevets**

(19)

(11) Veröffentlichungsnummer: **0 105 123**
**A2**

(12) # EUROPÄISCHE PATENTANMELDUNG

(21) Anmeldenummer: **83107638.5**

(22) Anmeldetag: **03.08.83**

(51) Int. Cl.³: **B 29 C 1/00, F 16 J 15/32**

(30) Priorität: **31.08.82 DE 3232287**

(43) Veröffentlichungstag der Anmeldung: **11.04.84**
**Patentblatt 84/15**

(84) Benannte Vertragsstaaten: **AT BE CH DE FR GB IT LI LU
NL SE**

(71) Anmelder: **Clouth Gummiwerke AG, Niehler
Strasse 92 - 116, D-5000 Köln 60 (DE)**
Anmelder: **Thyssen Industrie AG, Am Thyssenhaus 1,
D-4300 Essen (DE)**

(72) Erfinder: **Adolph, Werner, Hummelsbergstrasse 8,
D-5000 Köln 41 (DE)**
Erfinder: **Hirsch, Horst, Fred-Endrikat-Strasse 24,
D-4690 Herne 2 (DE)**

(74) Vertreter: **Happe, Otto, Dipl.-Ing., Isselburger Strasse 12,
D-5000 Köln 60 (DE)**

(54) **Form zur Herstellung von Dichtringen.**

(57) Eine aus mehreren Einzelteilen aufgebaute Form zur Herstellung von einen Dichtwulst (4) und eine Haltekralle (5) aufweisenden Dichtringen aus Gummi o. dgl. für Steckmuffenverbindungen, die bei der Verbindung von Rohren und Formstücken aus duktilem Gußeisen sowie beim Anschluß von Rohren und Formstücken aus duktilem Gußeisen an Rohre und Formstücke aus Stahl oder Kunststoff Anwendung finden, weist mindestens drei ringförmige Einzelteile (Ringe 1, 2 und 3) auf, die derart ausgebildet und/oder angeordnet sind, daß sich keine Teilungsfuge auf der ringinneren Dichtfläche (8) der herzustellenden Dichtringe befindet.

EP 0 105 123 A2

- 1 -

Form zur Herstellung von Dichtringen

Die Erfindung betrifft eine aus mehreren Einzelteilen
aufgebaute Form zur Herstellung von einen Dichtwulst
und eine Haltekralle aufweisenden Dichtringen aus Gummi
o. dgl. für Steckmuffenverbindungen, die bei der Verbindung von Rohren und Formstücken aus duktilem Gußeisen
sowie beim Anschluß von Rohren und Formstücken aus
duktilem Gußeisen an Rohre und Formstücke aus Stahl
oder Kunststoff Anwendung finden.

Bei den in der vorgenannten Form herzustellenden Dichtringen handelt es sich um sogenannte Tyton- und Standard-
Ringe für Steckmuffenverbindungen nach DIN 28 603, wobei
der Dichtring in die Muffenkammer des einen Rohres bzw.
Formstückes eingelegt wird und sodann das Spitzende des
anderen Rohres bzw. Formstückes in die Muffe eingeschoben wird. Diese Dichtringe sind einer hohen thermischen und chemischen sowie insbesondere einer infolge
der Längsbeweglichkeit der Rohre bzw. Formstücke auftretenden hohen mechanischen Beanspruchung ausgesetzt.
Die hohe Beanspruchung führt in verhältnismäßig kurzer
Zeit zu einer Beschädigung der Dichtringe an denjenigen
Stellen ihrer Dichtfläche, an denen die Form Teilungsfugen aufweist. Der Austausch derart beschädigter Dicht-

327

- 2 -

ringe, daß keine einwandfreie Abdichtung mehr gewährleistet ist, erfordert einen mit hohen Kosten verbundenen Aufwand.

Der Erfindung liegt die Aufgabe zugrunde, die Form der
eingangs genannten Art derart zu verbessern, daß die
vorgenannten Nachteile nicht mehr auftreten können.

Die Lösung der gestellten Aufgabe besteht darin, daß
die Form mindestens drei ringförmige Einzelteile aufweist, die derart ausgebildet und/oder angeordnet
sind, daß sich keine Teilungsfuge auf der ringinneren
Dichtfläche der herzustellenden Dichtringe befindet.
Durch die erfindungsgemäße Gestaltung der Form weisen
die hergestellten Dichtringe im Bereich ihrer ringinneren Dichtfläche keine Schwachstellen auf, so daß die
Lebensdauer dieser Dichtringe wesentlich verlängert
wird.

In Ausgestaltung der Erfindung sind die drei ringförmigen Einzelteile der Form derart ausgebildet bzw.
angeordnet, daß sich eine Teilungsfuge im Bereich der
Haltekralle und die andere Teilungsfuge sich auf der
der ringinneren Dichtfläche der herzustellenden Dichtringe abgewandten Seite des Dichtwulstes befindet, wobei zweckmäßigerweise die auf der der ringinneren
Dichtfläche der herzustellenden Dichtringe abgewandten
Seite des Dichtwulstes befindliche Teilungsfuge schräg
verläuft. Weder die Teilungsfuge im Bereich der Haltekralle noch die Teilungsfuge auf der der ringinneren
Dichtfläche der Dichtringe abgewandten Seite beeinträchtigen die Lebensdauer der Dichtringe.

A 327

- 3 -

Bei einer bevorzugten Ausführungsform der Erfindung bildet die auf der der ringinneren Dichtfläche der herzustellenden Dichtringe abgewandten Seite des Dichtwulstes befindliche Teilungsfuge mit der am äußeren Ende der Haltekralle befindlichen Teilungsfuge einen Winkel von etwa 30$^o$, wobei die gedachte Verlängerung der erstgenannten Teilungsfuge etwa durch den Mittelpunkt des Dichtwulstes der herzustellenden Dichtringe verläuft. Durch diese Anordnung der Teilungsfugen werden das Trennen der einzelnen Formteile voneinander und das Herausnehmen eines fertigen Dichtringes aus der Form wesentlich erleichtert.

Das Trennen der einzelnen Formteile voneinander und das Herausnehmen eines fertigen Dichtringes aus der Form wird dadurch noch mehr erleichtert, daß das mittlere ringförmige Einzelteil der Form mindestens zwei radial verlaufende Teilungsfugen aufweist, also aus zwei Ringhälften besteht.

In der Zeichnung ist eine erfindungsgemäße Form zur Herstellung von Dichtringen beispielsweise dargestellt. Es zeigen:

Fig. 1    die linke Hälfte einer Form im Querschnitt;

Fig. 2    ein Viertel des mittleren Formringes in Draufsicht.

Die dargestellte Form besteht aus dem oberen Formring 1, dem mittleren Formring 2 und dem unteren Formring 3. An den Konturen des Formnestes sind die Einzelheiten der herzustellenden Dichtringe zu erkennen, nämlich ein Dichtwulst 4 mit dem Mittelpunkt M und eine Haltekralle 5.

Die Teilungsfuge 6 zwischen dem oberen Formring 1 und dem mittleren Formring 2 ist am äußeren Ende der Haltekralle 5 angeordnet, während die Teilungsfuge 7 zwischen dem mittleren Formring 2 und dem unteren Formring 3 auf der der ringinneren Dichtfläche 8 der herzustellenden Dichtringe abgewandten Seite des Dichtwulstes 4 angeordnet ist. Die schräg verlaufende Teilungsfuge 7 bildet mit der waagerecht verlaufenden Teilungsfuge 6 einen Winkel a, wobei die gedachte Verlängerung 7.1 der Teilungsfuge 7 etwa durch den Mittelpunkt M des Dichtwulstes 4 verläuft.

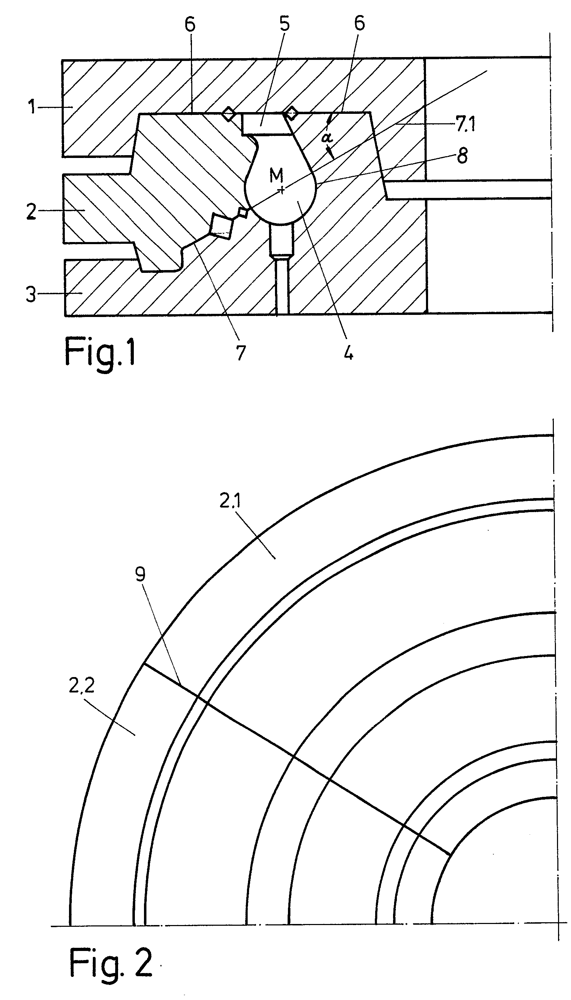

Der mittlere Formring 2 weist zwei radiale Teilungsfugen 9 auf, d. h. er besteht aus zwei Ringhälften 2.1 und 2.2 (vgl. Fig. 2).

A 327

Patentansprüche:

1. Aus mehreren Einzelteilen aufgebaute Form zur Herstellung von einen Dichtwulst und eine Haltekralle aufweisenden Dichtringen aus Gummi o. dgl. für Steckmuffenverbindungen, die bei der Verbindung von Rohren und Formstücken aus duktilem Gußeisen sowie beim Anschluß von Rohren und Formstücken aus duktilem Gußeisen an Rohre und Formstücke aus Stahl oder Kunststoff Anwendung finden, d a d u r c h   g e k e n n z e i c h - n e t , daß die Form mindestens drei ringförmige Einzelteile (Ringe 1, 2 und 3) aufweist, die derart ausgebildet und/oder angeordnet sind, daß sich keine Teilungsfuge auf der ringinneren Dichtfläche (8) der herzustellenden Dichtringe befindet.

2. Form nach Anspruch 1, dadurch gekennzeichnet, daß deren drei ringförmige Einzelteile (Ringe 1, 2 und 3) derart ausgebildet bzw. angeordnet sind, daß sich eine Teilungsfuge (6) im Bereich der Haltekralle (5) und die andere Teilungsfuge (7) sich auf der der ringinneren Dichtfläche (8) der herzustellenden Dichtringe abgewandten Seite des Dichtwulstes (4) befindet.

3. Form nach Anspruch 2, dadurch gekennzeichnet, daß die auf der der ringinneren Dichtfläche (8) der herzustellenden Dichtringe abgewandten Seite des Dichtringes (4) befindliche Teilungs- fuge (7) schräg verläuft.

327                                                                  – 2 –

4. Form nach Anspruch 3, dadurch gekennzeichnet, daß die auf der der ringinneren Dichtfläche (8) der herzustellenden Dichtringe abgewandten Seite des Dichtwulstes (4) befindliche Teilungsfuge (7) mit der am äußeren Ende der Haltekralle (5) befindlichen Teilungsfuge (6) einen Winkel (a) von etwa 30° bildet, wobei die gedachte Verlängerung (7.1) der erstgenannten Teilungsfuge (7) etwa durch den Mittelpunkt (M) des Dichtwulstes (4) der herzustellenden Dichtringe verläuft.

5. Form nach Anspruch 3 oder 4, dadurch gekennzeichnet, daß deren mittleres ringförmiges Einzelteil (Ring 2) mindestens zwei radial verlaufende Teilungsfugen (9) aufweist, also aus zwei Ringhälften (2.1 und 2.2) besteht.

A 327

0105123

1/1

Fig.1

Fig. 2